# EUROPÄISCHE PATENTSCHRIFT

(11) **EP 0 586 805 B1**
(45) Veröffentlichungstag und Bekanntmachung des Hinweises auf die Patenterteilung: **15.01.1997**
(21) Anmeldenummer: 93110166.1
(22) Anmeldetag: 25.06.1993
(51) Int. Cl.: C02F 3/04

(54) **Filter für Teichwasser**
Filter for pond water
Filtre pour l'eau d'étang

(30) Priorität: 12.08.1992 DE 4226660
(43) Veröffentlichungstag der Anmeldung: 16.03.1994
(73) Patentinhaber: OASE-PUMPEN Wübker Söhne GmbH & Co., Maschinenfabrik, 48477 Hörstel (DE)
(72) Erfinder: Wübker, Josef, Dr.Dipl.-Ing., D-4500 Osnabrück (DE)
(74) Vertreter: Busse & Busse Patentanwälte

(56) Entgegenhaltungen:
- WO-A-87/04424
- WO-A-91/03429
- US-A- 4 184 947
- US-A- 5 156 741

## Beschreibung

Die Erfindung betrifft einen Filter für Teichwasser nach dem Oberbegriff des Anspruchs 1.

Viele Teiche und Wasserläufe sind nicht in der Lage, sich in ausreichendem Maße selbst zu regenerieren. Dies gilt insbesondere für kleinere Teiche mit gepflanztem Teich- und Randuferbewuchs und/oder auch mit einem Fischbesatz. Ein starker Lichteinfall, insbesondere bei flacheren Teichen, der Eintrag von organischen Stoffen, Pflanzendünger und/oder Tierfutter in einer Menge, die sich nicht ohne weiteres von selbst abbaut, führt leicht zu einer Störung des ökologischen Gleichgewichts. Bekannte Teichfilter sollen sowohl die Aufgaben mechanischer Filterung in bezug auf schwimmende und schwebende Partikel im Wasser erfüllen wie auch der Zersetzung in Filterschichten mit einem Besatz anaerober und/oder aerober Bakterien.

Herkömmliche Filter dieser Art sind in der Regel als kompakte, geschlossene Geräte ausgelegt, die technisch mit eingebauten mechanischen Filter und Kies- oder Granulatfiltern eine hohe spezifische Durchsatzleistung bieten, allerdings auch einen hohen Wartungsaufwand erfordern. Die sich relativ schnell ansammelnden Schwebstoffe und Abbauprodukte verlangen sowohl eine Wartung mechanischer Rückhaltefilter wie auch eine Rückspülung von Filterbereichen mit Filtermaterial. Dieses ist nicht nur vom Arbeitsaufwand her unerwünscht, es verlangt auch baulich-technisch Raum und Möglichkeiten für Wartungsarbeiten und ruft insbesondere bei Unachtsamkeit die Gefahr von Störungen hervor.

Aufgabe der Erfindung ist es, einen Filter zu schaffen, der für den Anwender leichter einbaubar ist, weniger Kontroll- und Wartungsaufwand erfordert und sich besser in eine Gartensituation einfügen läßt als herkömmliche Filter.

Gemäß der Erfindung wird diese Aufgabe von einem Filter nach dem Oberbegriff des Anspruchs 1 ausgehend mit den kennzeichnenden Merkmalen des Anspruchs 1 gelöst.

Der erfindungsgemäße Filter geht mit einer großflächigen, offenen Bauform zu einem "Filterteich" über, dessen Filterabteil bepflanzbar ist und das sich somit anders als ein technisches geschlossenes Filtergerät in eine Gartenlandschaft oder eine sonstige naturnahe Umgebung einpaßt. Eine Einspeisung in einen Teich durch ein fließendes Gewässer unter Einschluß eines oft schon zur Sauerstoffanreicherung im Teich vorgesehenen, über eine Pumpe gespeisten Fließwasserkreislaufs ist in einer ansprechenden Weise mit einem solchen Filter auszustatten.

Dabei dient eine Bepflanzung des Filterabteils keineswegs vorrangig gartengestalterischen Ansprüchen, sondern schafft mit einer Wurzelraumfilterung eine Entsorgung, bei der viele von den Wurzeln dieser Pflanzen aufnehmbare Stoffe dem Wasser entzogen werden. Die Brauchbarkeit einer Wurzelraumentsorgung hat sich sogar bei der Klärung von Haushalts-Abwässern in Versuchen nachweisen lassen, bei denen eine Filtrierung von oberflächig zugeleitetem Abwasser durch Sumpfpflanzen erfolgte. Besonders geeignet zur Wurzelraumentsorgung sind Sumpf- und Wasserpflanzen wie verschiedene Helophyten-Arten, Schilf-Arten und Binsen-Arten.

Die Wirkung dieser Wurzelraumentsorgung ist aber stark an eine Zersetzung durch Bakterien gebunden, die sich im Filtermaterial ansiedeln und durch gleichmäßige Versorgung zu erhalten sind. Eine ungestörte stetige Funktion ist dabei insbesondere durch einen aufsteigenden Sickerstrom durch das Filtermaterial zu erreichen, der keine groben und schweren Schwebstoffe mitreißt, sondern im Absetzbereich zurückläßt. Diese belasten den Filter nicht, sondern setzen sich ab, und brauchen nur gelegentlich entfernt zu werden.

Wesentlich ist insbesondere auch die Großflächigkeit eines solchen Filterteichs, z.B. mit mehr als einem Quadratmeter Fläche und mit Fließgeschwindigkeiten von unter 1 m/h, mit denen zum einen ausreichende Einwirkungs- und Entsorgungszeiten im Filterbereich gewährleistet werden, mit denen zum anderen aber auch eine ausreichende Ruhe im Absetzbereich eintritt, der es Schwebeteilchen ermöglicht, sich abzusetzen, anstatt mit der Strömung mitgerissen zu werden.

Drei Ausführungsbeispiele der Erfindung sind in der Zeichnung dargestellt und werden nachfolgend näher beschrieben. In der Zeichnung zeigen jeweils in schnittbildlicher Seitenansicht, im Boden eingesetzt und bepflanzt:
- Fig. 1: einen Teichfilter in einer ersten Ausführungsform,
- Fig. 2: einen Teichfilter in einer zweiten Ausführungsform und
- Fig. 3: einen Teichfilter in einer dritten Ausführungsform.

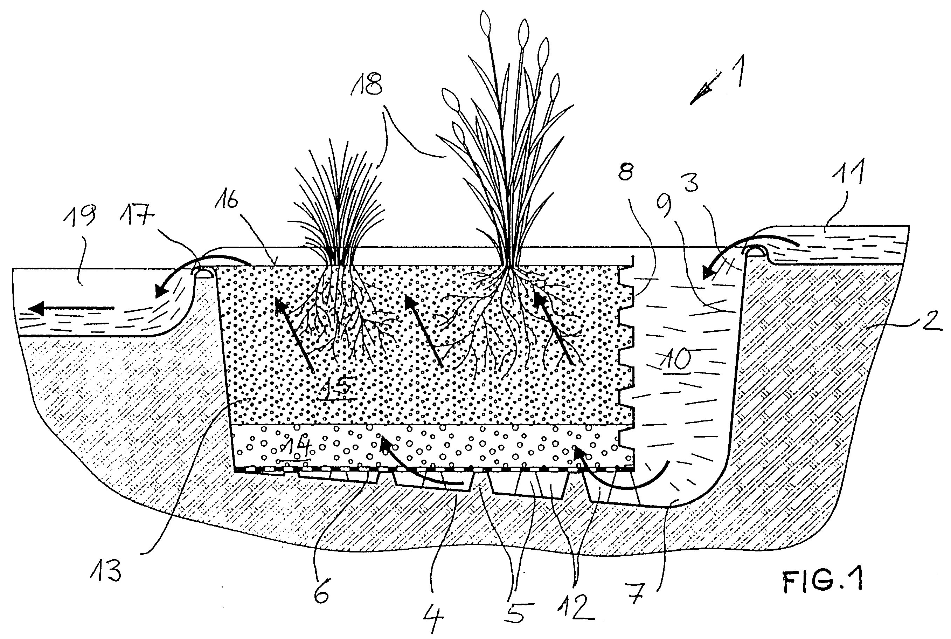

Der in Fig. 1 insgesamt mit 1 bezeichnete und in einem Bereich eines Bodens 2 (gewachsener Boden, Mutterboden und/oder Kies- oder Sandanfüllung) eingesetzte Teichfilter umfaßt ein wannenförmiges Filtergehäuse 3, tiefgezogen aus einem starkwandigen Polyethylen mit einer Grundfläche von etwa 2 m², wobei der Grundriß nicht gradlinig (rechteckig oder quadratisch) begrenzt, sondern mit unregelmäßigen und gekurvten Randformen natürlichen Formen angenähert ist.

Die Wannenform des Filtergehäuses 3 ist auch in der Höhe nicht gleichmäßig, allerdings in systematischer Weise, indem sie einen Boden 4 aufweist, der größtenteils als Noppenboden mit rasterförmig angeordneten Noppen 5 ausbildet, die oberseitig zu einer einheitlichen Auflagerfläche für einen Siebboden 6 nivelliert sind, während der Noppenboden 4 zwischen den Noppen gleichförmig zu einem tiefergelegenen Sumpf 7 abfällt, der nicht von dem Siebboden 6 abgedeckt ist. Zum Sumpf 7 hin schließt sich an den horizontalen Siebboden eine im wesentlichen senkrecht ausgerichtete Stützwand 8 an, die wie der Siebboden 6 und das Filtergehäuse 3 aus Kunststoff besteht und die aus Gründen der Flächenaussteifung gewellt ausgebildet ist. Zwischen der Stützwand 8, die sich in Blickrichtung der Fig. 1 als Schott quer durch das wannenförmige Filtergehäuse 3 hindurchzieht und einer gegenüberliegenden Seitenwand 9 des Filtergehäuses 3 ist eine großvolumige Absetzkammer 10 gebildet, in die das zulaufende Wasser eingespeist wird, welches im Ausführungsbeispiel über eine Rinne 11 von oben zuläuft.

Die großvolumige Absetzkammer 10 schafft eine Wasserberuhigung, insbesondere nach unten und zu den in Blickrichtung der Fig. 1 vorne und hinten liegenden Querseiten hin, so daß sich mit dem Zulauf eingebrachte Partikel und Schwebstoffe im Bereich des Sumpfes absetzen können.

Diese Sedimente wie Bodenpartikel, Sand und schwere organische Stoffe gelangen damit aus dem Strom des zu filternden Wassers und sind, was noch wichtiger ist, durch einfache Sichtprüfung von oben zu überwachen und zu prüfen und auch auf einfache Weise von Hand oder durch ein Handwerkzeug herauszuholen. Zur Entnahme von Schlammablagerungen kann in den Sumpf 7 auch ein becherförmiger Einsatz ("Schlammeimer") herausnehmbar eingesetzt werden.

Aus der Absetzkammer 10 gelangt das Wasser in einen Zulaufraum 12 zwischen Siebboden 6 und Noppenboden 4, der unterseitig vom Sumpf 7 hinweg leicht ansteigt, um auf der abgelegenen Seite des Noppenbodens 4 keilförmig gegen den Siebboden 6 hin spitzwinklig anzustoßen. Dies entspricht dem sich verringernden Querschnittsbedarf für das Wasser, das mehr und mehr nach oben durch den Siebboden 6 hindurchtritt. Weiterhin wird mit dem Ansteigen des Noppenbodens 4 in Strömungsrichtung und insbesondere mit der Richtungsumkehr des Wassers, das im Absetzraum 10 zunächst nach unten sinkt und dann durch den Siebboden 6 wieder nach oben ansteigt, ein Ausfallen von Sinkstoffen forciert.

Oberhalb des Siebbodens wird in einem seitlich durch das Filtergehäuse und die Stützwand 8 begrenzten Filterabteil 13 die eigentliche Filterung des Wassers durchgeführt. Zunächst durchquert das Wasser eine untere, direkt auf dem Siebboden 6 auflagernde Kiesschicht 14, die den Aufgaben einer mechanischen Filterung und der Ansiedlung von Bakterien zum Abbau organischer Bestandteile des Wassers dient. Darüber ist eine Lage 15 weiteren Filtermaterials, welches auch aus einem Kies oder einem Gemisch körniger Materialien bestehen kann, gelagert, die bis zur Höhe eines Wasserspiegels 16 reicht, der durch einen Ablauf 17 bestimmt ist. Von dem Ablauf 17 gelangt das Wasser weiter, z.B. in eine Ablaufrinne 19 und weiterhin schließlich in den Gartenteich.

In diese Filterlage 15 sind Pflanzen 18 eingesetzt, die mit ihren in das Filtermaterial 15 weit hineinreichenden Wurzeln eine Wurzelraumentsorgung erzielen. Die im Wasser enthaltenen unerwünschten Stoffe werden also weitgehend entweder im Sumpf 7 abgelagert oder aber im Filterabteil 13 zersetzt und weiterhin durch die Pflanzen entsorgt. Für ein Funktionieren eines solchen mit natürlichen Mitteln arbeitenden Filters ist es allerdings wesentlich, daß ausreichend große Filterflächen und Filtervolumen zur Verfügung stehen, die mit langsamen Wassergeschwindigkeiten von weniger als 1 m/h Schweb- und Sinkstoffe zum Absetzen bringen und die insbesondere dem Filter so viel Fläche und Raum geben, daß dieser gründlich arbeiten und sich auch selbst regenerieren kann. Mit ausreichenden Bemessungen lassen sich dann auch Eingriffe in einen solchen Filter zu Reinigungszwecken, etwa zur Säuberung von Kieslagen weitestgehend reduzieren und insbesondere auch Rückspülungen zu Reinigungszwecken weitgehend vermeiden.

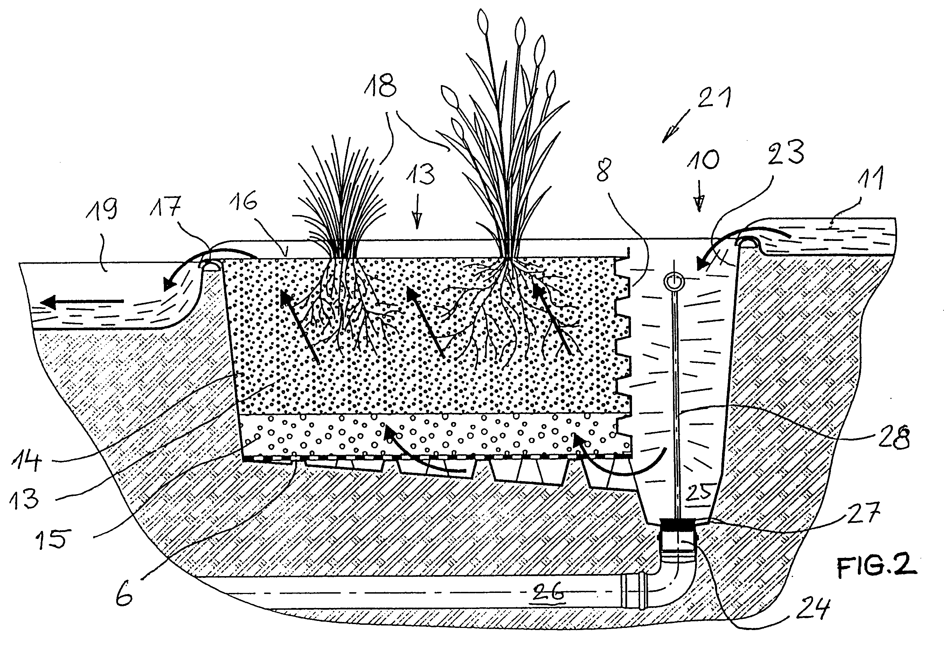

Der in Fig. 2 dargestellte und insgesamt mit 21 bezeichnete Filter ist abgesehen von den nachfolgend näher beschriebenen Einzelheiten baugleich mit dem Filter 1 gemäß Fig. 1, so daß in der Zeichnung auch entsprechende Bauteile mit den gleichen Bezugszeichen wie in Fig. 1 bezeichnet worden sind.

Ein hier mit 23 bezeichnetes Filtergehäuse bildet einen stärker als in Fig. 1 nach unten hin ausgeformten und insbesondere auch trichterförmig zu einem Abfluß 24 hin zulaufenden Sumpf 25 aus. der Ablauf 24 mündet in ein Ablaufrohr 26 und ist durch einen Stopfen 27 mit einer Bedienstange 28 verschließbar.

Damit ist es möglich, eine Ansammlung von Schlamm im Sumpf 25 auf bequeme Weise ablaufen zu lassen, so daß dieser durch das Ablaufrohr 26 herausgespült wird zu einem tiefergelegenen Sammelbereich. Gleichzeitig mit dem Herausschwemmen von Schlamm und anderen Sedimenten aus dem Sumpf 25 ergibt sich ein Rückspülungseffekt in Gegenrichtung zu den in Fig. 2 eingezeichneten Strömungspfeilen, mit denen auch vorher mit dem Wasserstrom mitgeführte Stoffe, die am Siebboden 6 und in den unteren Bereichen der Lage 15 von Filtermaterial sitzen, abzuführen sind. Ein kurzzeitiges Auftauchen des Filterabteils 13 schädigt weder den Besatz von Bakterien noch den Wurzelbereich der Pflanzen 18.

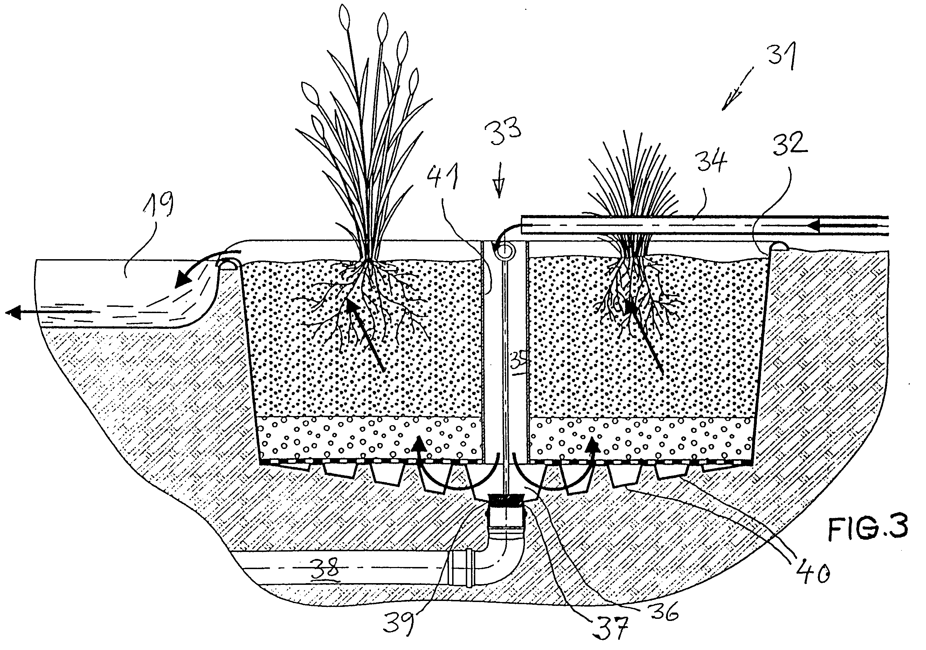

In Fig. 3 ist eine Grundriß-Variante der Ausführungsform gemäß Fig. 2 dargestellt, bei der ein Filter 31 ein Filtergehäuse 32 umfaßt, das einen mittigen Zulauf 33 (über ein Zulaufrohr 34) aufweist und das eine Absetzkammer 35 unterhalb des Zulaufs 33 ausbildet, an deren unteren Ende ein Sumpf 36 mit einem Ablauf 37 zu einem Ablaufrohr 38 angeordnet und mit einem Stopfen 39 verschließbar ist. Das Filtergehäuse 32 bildet hier in entsprechender Anpassung an die Grundform einen zu allen Seiten hin ansteigenden Filterboden 40 aus.

In allen drei vorbeschriebenen Ausführungsbeispielen wird der Filter hauptsächlich durch drei leicht zusammenzusteckende Kunststoffteile gebildet, nämlich ein Filtergehäuse, einen Siebboden und eine Stützwand 8 bzw. ein Schachtrohr 41 (Fig. 3). Im demontierten Zustand sind diese Teile platzsparend zu stapeln bzw. zusammenzulegen. Insbesondere das wannenförmige Filtergehäuse kann mit weiteren Filtergehäusen gestapelt werden. Die flachen Siebböden und Stützwände sind gleichfalls stapelbar. Die voluminöse Auffüllung des Filterabteils mit Kies ist grundsätzlich ohne Bereitstellung besonders zu versendender Spezialmaterialien möglich, so daß Transport und Lagerung der maßgeblichen Teile des Filters kostengünstig möglich sind. Gleichzeitig ist es aber auch für den Anwender möglich, ein solches Filtergehäuse selbst in einem Garten einzubauen. Mit einem entsprechenden Pflanzenbesatz wird somit ein leicht zu realisierender Filter geschaffen, der einfach zu überwachen und ggf. zu warten ist. Selbst dann, wenn ein Schlammablauf wie in Fig. 2 oder 3 nicht vorgesehen ist, kann eine Entnahme von Sinkstoffen aus dem Sumpf sehr einfach erzielt werden. Es versteht sich, daß dies gerätetechnisch auch noch durch einen "Schlammeimer", also einen becherförmigen Einsatz im Sumpfbereich, erleichtert werden kann. Selbst dann aber, wenn die Absetzkammer oder das Filterabteil trotz deren großer Leistungsfähigkeit verstopfen sollten - etwa aufgrund langdauernder Vernachlässigung der Wartung oder starker unwetterbedingter Einschwemmungen - ist die offene Filterbauweise unkritisch: Der Wasserstrom spült ohne Rückstau oder Nebenschäden über das Filterabteil hinweg und macht damit auch einen Wartungsbedarf augenfällig. Die Verwendung von Pflanzen in einem solchen großflächigen Filter ist dabei eine Begrünung, die sowohl funktionell für die Reinigung des Wassers wie auch bildlich für das Aussehen des Gartens vorteilhaft ist.

## Patentansprüche

1. Filter für Teichwasser und dgl. aus offenen Wasserflächen und -läufen entnommenes Wasser, bei dem ein Filtergehäuse ein Filterabteil mit ein- oder mehrschichtig gelagertem Filtermaterial einschließt, das zu einer aufwärts verlaufenden Durchströmung unterseitig mit einem Siebboden und oberseitig mit einem Ablauf versehen ist, wobei der Siebboden mit einem Abstand vom Filtergehäuse angeordnet ist und mit diesem einen Zulaufraum begrenzt, und wobei der Zulaufraum in eine oberseitig zugängliche Absetzkammer übergeht, dadurch gekennzeichnet, daß das Filtergehäuse (3, 23,32) als großflächige offene Wanne mit einem oberseitig freiliegenden Filterabteil (13) geformt ist, welches als Wurzelraumfilter mit einer zur Aufnahme eines Pflanzen-Wurzelraums ausreichende Höhe ausgebildet ist, und daß die Absetzkammer (10,35) einen freien, oberseitig offenen Wasserraum bildet.

2. Filter nach Anspruch 1, dadurch gekennzeichnet, daß das Filtergehäuse (3,23,32) unterhalb des Siebbodens (6) zu dessen Auflagerung Distanzierungsvorsprünge (5) aufweist.

3. Filter nach Anspruch 2, dadurch gekennzeichnet, daß die Distanzierungsvorsprünge (5) noppenartig sind.

4. Filter nach einem der Ansprüche 1 bis 3, dadurch gekennzeichnet, daß die Absetzkammer (10, 35) schachtartig ausgebildet ist.

5. Filter nach Anspruch 4, dadurch gekennzeichnet, daß die Absetzkammer (10,35) mit einem offenen oberen Bereich einen Einlauf für zu filterndes Wasser bildet.

6. Filter nach Anspruch 4 oder 5, dadurch gekennzeichnet, daß die Absetzkammer (10,35) unterseitig unter den Zulaufraum (12) hinabreicht.

7. Filter nach Anspruch 6, dadurch gekennzeichnet, daß Absetzkammer (10,35) und Zulaufraum (12) unterseitig durch das Filtergehäuse (3,23,32) begrenzt sind, das mit einem Bodenbereich zur Absetzkammer (10,35) hin geneigt ist.

8. Filter nach Anspruch 5,6 oder 7, dadurch gekennzeichnet, daß das Filtergehäuse (3,23,32) im Bereich der Absetzkammer (10,35) einen vertieften Sumpf (7,36) ausbildet.

9. Filter nach Anspruch 8, dadurch gekennzeichnet, daß der Sumpf (7,36) einen verschließbaren Ablauf (27,37) enthält.

10. Filter nach einem der Ansprüche 1 bis 9, dadurch gekennzeichnet, daß das Filtergehäuse (3, 23,32) in Form einer tiefgezogenen Wanne aus Kunststoff gebildet ist.

11. Filter nach Anspruch 10, dadurch gekennzeichnet, daß das Filterabteil (13) in dem Filtergehäuse (3,23,32) durch zusammensteckbare Kunststoffteile begrenzt ist.

## Claims

1. A filter for pond water and like water taken from open waterways and other bodies of water, in which a filter housing encloses a filter compartment having a filter material arranged in one or more layers and which, for an upwardly travelling throughflow, is provided on its under side with a perforated bottom and with an outlet at the top, the perforated bottom being disposed at a distance from the filter housing and defining therewith an inlet space, the inlet space merging into a settling chamber which is accessible from the top, characterised in that the filter housing (3, 23, 32) is shaped like a large-area open tub with, exposed on the top, a filter compartment (13) which is constructed as a root space filter which is of a height sufficient to accommodate the root system of a plant and in that the settling chamber (10, 35) forms a free water chamber which is open at the top.

2. A filter according to claim 1, characterised in that the filter housing (3, 23, 32) comprises under the perforated bottom (6) spacing projections (5) on which it can stand.

3. A filter according to claim 2, characterised in that the spacing projections (5) are like studs.

4. A filter according to one of claims 1 to 3, characterised in that the settling chamber (10, 35) is of shaft-like construction.

5. A filter according to claim 4, characterised in that the settling chamber (10, 35) has an open upper portion which forms an inlet for water which is to be filtered.

6. A filter according to claim 4 or 5, characterised in that the settling chamber (10, 35) extends on its under side as far as the inlet chamber (12).

7. A filter according to claim 6, characterised in that the settling chamber (10, 35) and inlet chamber (12) are on their under side bounded by the filter housing (2, 23, 32) which has an area of its bottom inclined towards the settling chamber (10, 35).

8. A filter according to claim 5, 6 or 7, characterised in that the filter housing (3, 23, 32) forms a depressed sump (7, 36) in the region of the settling chamber (10, 35).

9. A filter according to claim 8, characterised in that the sump (7, 36) contains a closeable outlet (27,37).

10. A filter according to one of claims 1 to 9, characterised in that the filter housing (3, 23, 32) is formed from synthetic plastics material in the shape of a deep-drawn tub.

11. A filter according to claim 10, characterised in that the filter compartment (13) in the filter housing (3, 23, 32) is bounded by synthetic plastics parts which can be fitted together.

## Revendications

1. Filtre pour eaux d'étangs et eaux analogues provenant de plans d'eau et de cours d'eau à découvert, dans lequel une enceinte de filtre renferme une section de filtration composée d'une matière filtrante disposée en une ou plusieurs couches, laquelle matière est pourvue, en vue d'un écoulement ascendant, dans sa partie inférieure, d'un fond perforé, et dans sa partie supérieure, d'une évacuation, le fond perforé étant disposé à une certaine distance de l'enceinte de filtre et délimitant avec cette dernière un espace d'amenée, l'espace d'amenée se fondant dans une chambre de sédimentation accessible par le haut, caractérisé en ce que l'enceinte de filtre (3, 23, 32) a la forme d'un bassin ouvert de grande surface comprenant une section de filtration (13) dégagée à sa face supérieure, laquelle se présente sous la forme d'un filtre à espace d'enracinement d'une hauteur suffisante pour recevoir un espace d'enracinement de plantes, et en ce que la chambre de sédimentation (10, 35) forme un réservoir d'eau ouvert à sa partie supérieure.

2. Filtre suivant la revendication 1, caractérisé en ce que l'enceinte de filtre (3, 23, 32) présente en dessous du fond perforé (6) des saillies d'espacement (5) destinées à le supporter.

3. Filtre suivant la revendication 2, caractérisé en ce que les saillies d'espacement (5) sont du type bouton.

4. Filtre suivant l'une quelconque des revendications 1 à 3, caractérisé en ce que la chambre de sédimentation (10, 35) est conçue en forme de puits.

5. Filtre suivant la revendication 4, caractérisé en ce que la chambre de sédimentation (10, 35) forme, grâce à une zone supérieure ouverte, une entrée pour l'eau à filtrer.

6. Filtre suivant la revendication 4 ou 5, caractérisé en ce que la chambre de sédimentation (10, 35) s'étend jusqu'au bas de l'espace d'amenée (12).

7. Filtre suivant la revendication 6, caractérisé en ce que la chambre de sédimentation (10, 35) et l'espace d'amenée (12) sont limités vers le bas par l'enceinte de filtre (3, 23, 32) dont la zone de fond va en s'inclinant vers la chambre de sédimentation (10, 35).

8. Filtre suivant la revendication 5, 6 ou 7, caractérisé en ce que l'enceinte de filtre (3, 23, 32) forme dans la zone de la chambre de sédimentation un puisard approfondi (7, 36).

9. Filtre suivant la revendication 8, caractérisé en ce que le puisard (7, 36) comporte un orifice d'évacuation obturable (27, 37).

10. Filtre suivant l'une quelconque des revendications 1 à 9, caractérisé en ce que l'enceinte de filtre (3, 23, 32) se présente sous la forme d'un bassin en matière plastique profondément embouti.

11. Filtre suivant la revendication 10, caractérisé en ce que la section de filtration (13) est délimitée dans l'enceinte de filtre (3, 23, 32) par des éléments en matière plastique pouvant être assemblés.
